# EUROPÄISCHE PATENTSCHRIFT

(11) **EP 1 281 542 B1**
(45) Veröffentlichungstag und Bekanntmachung des Hinweises auf die Patenterteilung: **15.11.2006**
(21) Anmeldenummer: 02014292.3
(22) Anmeldetag: 27.06.2002
(51) Int. Cl.: B60H 1/00, F24F 1/00

(54) **Klimaanlage**
Air-conditioner
Conditionneur d'air

(30) Priorität: 02.08.2001 DE 10138010
(43) Veröffentlichungstag der Anmeldung: 05.02.2003
(73) Patentinhaber: Behr France Rouffach SAS, 68250 Rouffach (FR)
(72) Erfinder: Klein, Henri, 68000 Colmar (FR)
(74) Vertreter: Grosse, Rainer

(56) Entgegenhaltungen:
- EP-A- 0 416 523
- DE-A- 10 058 953
- US-A- 3 916 988
- US-A- 4 108 376
- US-A- 5 590 540
- US-A- 6 138 749

## Beschreibung

Die vorliegende Erfindung betrifft eine Klimaanlage zur Kühlung eines Raumes, insbesondere eines Kraftfahrzeuginnenraumes.

Beispielsweise im Zusammenhang mit wasserseitig geregelten Kraftfahrzeugklimaanlagen ist es bekannt, derartige Klimaanlagen mit einer zusätzlichen Schichtungsklappe auszustatten, mit der beispielsweise Kaltluft den Mitteldüsen zugeführt werden kann, um eine Temperaturschichtung im Fahrzeug zu erhalten. Unter einer Temperaturschichtung versteht man beispielsweise eine Temperaturdifferenz zwischen Fußraum und dem oberen Innenraumbereich. Im Allgemeinen wird es von den Fahrzeuginsassen als angenehm empfunden, wenn eine derartige Temperaturdifferenz besteht.

Aus der DE 100 58 953 A geht eine Fahrzeugklimaanlage hervor, die eine Gesichtsklappe, eine Fußklappe und eine Entfrosterklappe aufweist, wobei die Gesichtsklappe stufenförmig geschlossen wird, während eine Mischklappe in diesem Bereich eine mehr oder weniger große Mittelstellung einnimmt. Die Mischklappe ist derart ausgebildet, dass sie eine Heizeinrichtung abdecken kann und demzufolge in einem bestimmten Stellungsbereich eine Reihenschaltung mit einem Heizkörper bildet.

Der Erfindung liegt die Aufgabe zugrunde, eine Klimaanlage zur Kühlung eines Raumes zu schaffen, mit der ein sehr angenehmes Klima erzeugt werden kann.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Die erfindungsgemäße Klimaanlage zeichnet sich dadurch aus, dass eine Mitteldüsen zugeordnete erste Klappe vorgesehen ist und dass femer eine Schichtungsklappe vorhanden ist, die strömungsabwärts von einem Verdunster sowie parallel zu einem Heizelement angeordnet ist und über deren Stellung eine Temperaturschichtung im zu kühlenden Raum hervorgerufen werden kann, wobei die erste Klappe und die Schichtungsklappe durch ein gemeinsames Stellglied betätigt werden und das Stellglied eine Abtriebsachse aufweist, die innerhalb eines ersten Winkelbereichs drehbar ist, in dem die erste Klappe geöffnet wird oder bleibt während die Schichtungsklappe geschlossen bleibt. Durch den Einsatz eines gemeinsamen Stellglieds für die erste Klappe und die Schichtungsklappe ergibt sich ein geringer Stellgliedaufwand, wodurch die Herstellungskosten gesenkt werden, ohne dass der Komfort nachteilig beeinflusst wird. Solange die Schichtungsklappe geschlossen ist, wird keine Temperaturschichtung im zu kühlenden Raum hervorgerufen.

Bei bevorzugten Ausführungsformen der erfindungsgemäßen Klimaanlage ist vorgesehen, dass das Stellglied einen Elektromotor aufweist. Bei diesem Elektromotor kann es sich insbesondere um einen Schrittmotor handeln.

Bei einer vorteilhaften Weiterbildung der erfindungsgemäßen Klimaanlage ist weiterhin vorgesehen, dass die erste Klappe und die Schichtungsklappe mechanisch gekoppelt sind. Diese Kopplung ist vorzugsweise derart ausgeführt, dass die erste Klappe und die Schichtungsklappe zumindest innerhalb von vorgegebenen Bereichen unabhängig voneinander bewegt, beispielsweise geschwenkt, werden können, während sie innerhalb von anderen Bereichen gleichzeitig bewegt, beispielsweise geschwenkt, werden.

Zusätzlich oder alternativ kann bei der erfindungsgemäßen Klimaanlage vorgesehen sein, dass das Stellglied eine Abtriebsachse aufweist, die innerhalb eines zweiten Winkelbereichs drehbar ist, in dem die erste Klappe geöffnet wird oder bleibt während die Schichtungsklappe geöffnet wird. Beispielsweise wenn die erste Klappe den Mitteldüsen der Klimaanlage eines Kraftfahrzeugs zugeordnet ist, wird im zweiten Winkelbereich eine Temperaturschichtung im Fahrzeuginnenraum hervorgerufen, beispielsweise derart, dass der Fußraum wärmer als der obere Teil des Fahrzeuginnenraums ist.

Zusätzlich oder alternativ kann vorgesehen sein, dass das Stellglied eine Abtriebsachse aufweist, die innerhalb eines dritten Winkelbereichs drehbar ist, in dem die erste Klappe geschlossen wird oder bleibt während die Schichtungsklappe geöffnet wird.

Bei bevorzugten Ausführungsformen der erfindungsgemäßen Klimaanlage ist vorgesehen, dass sich der erste Winkelbereich, der zweite Winkelbereich und der dritte Winkelbereich aneinander anschließen. Die Winkelbereiche können sich insbesondere auf die Stellung einer Abtriebswelle eines Schrittmotors beziehen.

Die erfindungsgemäße Lösung ist besonders vorteilhaft einsetzbar, wenn vorgesehen ist, dass die Klimaanlage eine wasserseitig geregelte Klimaanlage ist. Bei derartigen Klimaanlagen war gemäß dem Stand der Technik eine größere Anzahl von Stellgliedern erforderlich.

Es ist vorteilhaft, wenn strömungsaufwärts von dem Verdunster ein Gebläse vorgesehen ist.

Die Anordnung der Schichtungsklappe und des Heizelements kann vorzugsweise derart sein, dass die beiden Komponenten strömungsabwärts von dem Verdunster vorgesehen sind.

Insbesondere im Zusammenhang mit einer Klimaanlage für ein Kraftfahrzeug ist vorzugsweise vorgesehen, dass die Klimaanlage eine zweite Klappe aufweist, die einen Entfrostungskanal ganz oder teilweise öffnen und verschließen kann. Die Klimaanlage ist vorzugsweise derart ausgelegt, dass im Entfrostungsbetrieb eine möglichst große durch ein Heizelement erwärmte Luftmenge dem Entfrostungskanal zugeführt wird.

Vorzugsweise ist weiterhin vorgesehen, dass die Klimaanlage eine dritte Klappe aufweist, die einen Fußraumkanal ganz oder teilweise öffnen und verschließen kann.

Bei bevorzugten Ausführungsformen der erfindungsgemäßen Klimaanlage ist in diesem Zusammenhang vorzugsweise vorgesehen, dass die zweite Klappe und die dritte Klappe durch wenigstens ein weiteres Stellglied betätigt werden. Dieses weitere Stellglied ist vorzugsweise weder mit dem Stellglied noch mit der ersten Klappe oder der Schichtungsklappe gekoppelt.

Bevorzugte Ausführungsformen der erfindungsgemäßen Klimaanlage sehen weiterhin vor, dass die erste Klappe, die Schichtungsklappe, die zweite Klappe und die dritte Klappe in einem gemeinsamen Gehäuse angeordnet sind. Bei dieser Ausführungsform wie auch bei allen anderen Ausführungsformen der vorliegenden Erfindung ist vorzugsweise vorgesehen, dass die erste Klappe und/oder die Schichtungsklappe und/oder die zweite Klappe und/oder die dritte Klappe schwenkbar sind. Dies schließt selbstverständlich Ausführungsformen nicht aus, bei denen eine oder mehrere der genannten Klappen durch Schieben betätigt werden.

Ein Ausführungsbeispiel der Erfindung wird nachfolgend anhand der zugehörigen Zeichnungen näher erläutert.

Es zeigen:
- Figur 1: eine schematische Darstellung einer Ausführungsform der erfindungsgemäßen Klimaanlage; und
- Figur 2: zwei Graphen, bei denen der Öffnungsgrad in Prozent für die ersten Klappe (oberer Graph) und die Schichtungsklappe (unterer Graph) in Abhängigkeit von der Winkelstellung einer Abtriebsachse des Stellgliedes aufgetragen ist.

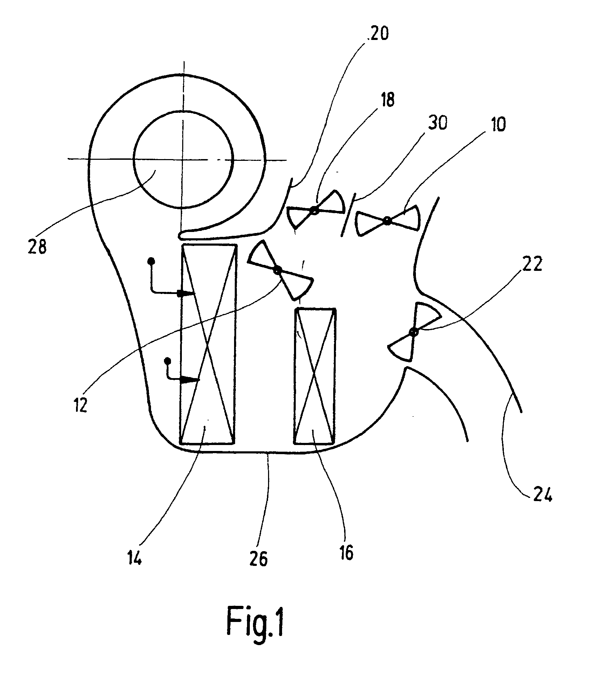

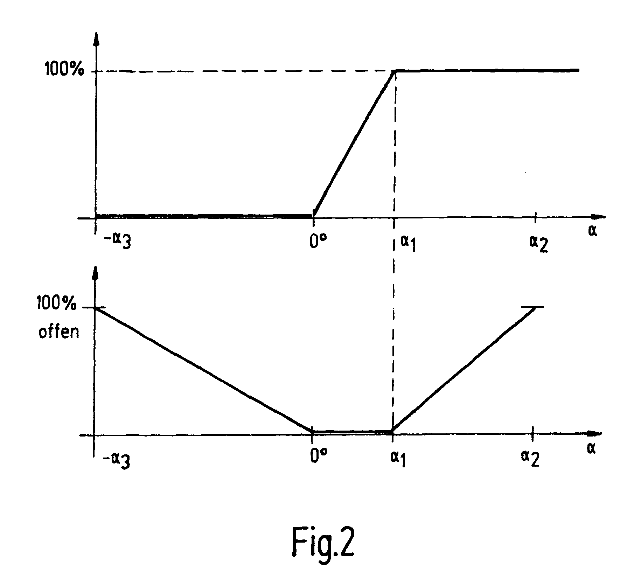

Figur 1 zeigt eine schematische Darstellung einer Ausführungsform der erfindungsgemäßen Klimaanlage. Die dargestellte Klimaanlage weist einen Verdunster 14 auf, der strömungsabwärts von einem Gebläse 28 in einem Gehäuse 26 angeordnet ist. Strömungsabwärts vom Verdunster 14 ist ein Heizelement 16 in Form eines Heizkörpers vorgesehen. Parallel zum Heizelement 16 ist eine Schichtungsklappe 12 angeordnet, die je nach Stellung ein Vorbeiströmen eines Teils der durch den Verdunster 14 geführten Luft am Heizelement 16 ermöglicht oder nicht. Strömungsabwärts von der Schichtungsklappe 12 und dem Heizelement 16 sind drei Kanäle 20, 24 und 30 angeordnet. Der Kanal 30 steht mit in Figur 1 nicht dargestellten Mitteldüsen eines Kraftfahrzeugs in Verbindung. In dem Kanal 30 ist eine erste Klappe 10 angeordnet, die den Kanal 30 je nach Stellung ganz oder teilweise öffnen oder verschließen kann. Der Kanal 20 steht mit im Bereich der Windschutzscheibe des Kraftfahrzeugs vorgesehenen Entfrostungsdüsen oder -schlitzen in Verbindung, wobei eine zweite Klappe 18 in dem Kanal 20 angeordnet ist, die diesen Kanal 20 ganz oder teilweise öffnen oder schließen kann. Der Kanal 24 steht mit in Figur 1 nicht dargestellten Belüftungsdüsen oder -schlitzen in Verbindung die im Fußraum des Kraftfahrzeugs angeordnet sind. Im Kanal 24 ist eine dritte Klappe 22 vorgesehen, die den Kanal 24 ganz oder teilweise öffnen oder schließen kann. Die erste Klappe 10 und die Schichtungsklappe 12 werden durch einen in Figur 1 nicht dargestellten gemeinsamen Schrittmotor betätigt, wobei die erste Klappe 10 und die Schichtungsklappe 12 in geeigneter Weise derart mechanisch gekoppelt sind, dass sich die anhand von Figur 2 näher erläuterte Betätigung der ersten Klappe 10 und der Schichtungsklappe 12 ergibt.

Figur 2 zeigt zwei Graphen, bei denen der Öffnungsgrad in Prozent für die ersten Klappe (oberer Graph) und die Schichtungsklappe (unterer Graph) in Abhängigkeit von der Winkelstellung einer Abtriebsachse des Stellgliedes aufgetragen ist. Der in den Figuren nicht dargestellte, das Stellglied bildende Schrittmotor weist eine Abtriebsachse oder -welle auf, die innerhalb eines ersten Winkelbereichs von 0° bis α₁ drehbar ist, in dem die erste Klappe 10 geöffnet wird während die Schichtungsklappe 12 geschlossen bleibt. Wenn sich die Abtriebsachse im ersten Winkelbereich von 0° bis α₁ befindet, wird somit keine Temperaturschichtung im Fahrzeuginneren hervorgerufen. Wenn sich die Abtriebsachse in einem zweiten Winkelbereich von α₁ bis α₂ befindet, bleibt die erste Klappe 10 geöffnet, während die Schichtungsklappe 12 geöffnet wird. Der zweite Winkelbereich von α₁ bis α₂ ist somit dazu vorgesehen, im Fahrzeuginnenraum eine Temperaturschichtung vorzusehen, beispielsweise derart, dass der an dem in Figur 1 dargestellten Heizelement vorbeigeführte Luftstrom, der kälter als der durch das Heizelement 16 geführte Luftstrom ist, den Mitteldüsen zugeführt wird. Dadurch wird eine Temperaturdifferenz zwischen Fußraum und dem oberen Fahrzeuginnenraum hervorgerufen, die im Allgemeinen als angenehm empfunden wird. Schließlich ist ein dritter Winkelbereich von 0° bis -α₃ vorgesehen, in dem die erste Klappe 10 geschlossen bleibt während die Schichtungsklappe 12 geöffnet wird. Auf diese Weise kann, sofern die in Figur 1 dargestellte dritte Klappe 22 ganz oder teilweise geöffnet ist, dem Fußraum kühlerer Luft zugeführt werden. Wie dies der Darstellung von Figur 2 zu entnehmen ist, schließen sich der erste Winkelbereich von 0° bis α₁, der zweite Winkelbereich von α₁ bis α₂ und der dritte Winkelbereich von 0° bis - α₃ aneinander an.

## Patentansprüche

1. Klimaanlage zur Kühlung eines Raumes, insbesondere eines Kraftfahrzeuginnenraumes, mit einer Mitteldüsen zugeordneten ersten Klappe (10), und mit einer Schichtungsklappe (12), die strömungsabwärts von einem Verdunster (14) sowie parallel zu einem Heizelement (16) angeordnet ist und über deren Stellung eine Temperaturschichtung im zu kühlenden Raum hervorgerufen werden kann, wobei die erste Klappe (10) und die Schichtungsklappe (12) durch ein gemeinsames Stellglied betätigt werden und das Stellglied eine Abtriebsachse aufweist, die innerhalb eines ersten Winkelbereichs (0°; α₁) drehbar ist, in dem die erste Klappe (10) geöffnet wird oder bleibt während die Schichtungsklappe (12) geschlossen bleibt.

2. Klimaanlage nach Anspruch 1, **dadurch gekennzeichnet, dass** das Stellglied einen Elektromotor aufweist.

3. Klimaanlage nach einem der vorhergehenden Ansprüche, **dadurch gekennzeichnet, dass** die erste Klappe (10) und die Schichtungsklappe (12) mechanisch gekoppelt sind.

4. Klimaanlage nach einem der vorhergehenden Ansprüche, **dadurch gekennzeichnet, dass** das Stellglied eine Abtriebsachse aufweist, die innerhalb eines zweiten Winkelbereichs (α₁; α₂) drehbar ist, in dem die erste Klappe (10) geöffnet wird oder bleibt während die Schichtungsklappe (12) geöffnet wird.

5. Klimaanlage nach einem der vorhergehenden Ansprüche, **dadurch gekennzeichnet, dass** das Stellglied eine Abtriebsachse aufweist, die innerhalb eines dritten Winkelbereichs (0°; -α₃) drehbar ist, in dem die erste Klappe (10) geschlossen wird oder bleibt während die Schichtungsklappe (12) geöffnet wird.

6. Klimaanlage nach einem der vorhergehenden Ansprüche, **dadurch gekennzeichnet, dass** sich der erste Winkelbereich (0°; α₁), der zweite Winkelbereich (α₁; α₂) und der dritte Winkelbereich (0°; -α₃) aneinander anschließen.

7. Klimaanlage nach einem der vorhergehenden Ansprüche, **dadurch gekennzeichnet, dass** sie eine wasserseitig geregelte Klimaanlage ist.

8. Klimaanlage nach einem der vorhergehenden Ansprüche, **dadurch gekennzeichnet, dass** sie eine zweite Klappe (18) aufweist, die einen Entfrostungskanal (20) ganz oder teilweise öffnen und verschließen kann.

9. Klimaanlage nach einem der vorhergehenden Ansprüche, **dadurch gekennzeichnet, dass** sie eine dritte Klappe (22) aufweist, die einen Fußraumkanal (24) ganz oder teilweise öffnen und verschließen kann.

10. Klimaanlage nach einem der vorhergehenden Ansprüche, **dadurch gekennzeichnet, dass** die zweite Klappe (18) und die dritte Klappe (22) durch wenigstens ein weiteres Stellglied betätigt werden.

11. Klimaanlage nach einem der vorhergehenden Ansprüche, **dadurch gekennzeichnet, dass** die erste Klappe (10), die Schichtungsklappe (12), die zweite Klappe (18) und die dritte Klappe (22) in einem gemeinsamen Gehäuse (26) angeordnet sind.

## Claims

1. Air-conditioner for cooling a space, in particular an interior space of a motor vehicle, said air-conditioner having a first valve (10) assigned to central nozzles, and having a stratification valve (12), which is disposed downstream from an evaporator (14) and parallel to a heating element (16) and through whose position a temperature stratification can be produced in the space to be cooled, wherein the first valve (10) and the stratification valve (12) are actuated by means of a common actuator, and the actuator has a driven axle which is rotatable within a first angular range (0°; α₁) in which the first valve (10) is or remains opened while the stratification valve (12) remains closed.

2. Air-conditioner according to claim 1, **characterized in that** the actuator has an electric motor.

3. Air-conditioner according to any one of the preceding claims, **characterized in that** the first valve (10) and the stratification valve (12) are mechanically coupled.

4. Air-conditioner according to any one of the preceding claims, **characterized in that** the actuator has a driven axle which is rotatable within a second angular range (α₁; α₂) in which the first valve (10) is or remains opened while the stratification valve (12) is opened.

5. Air-conditioner according to any one of the preceding claims, **characterized in that** the actuator has a driven axle which is rotatable within a third angular range (0°; -α₃) in which the first valve (10) is or remains closed while the stratification valve (12) is opened.

6. Air-conditioner according to any one of the preceding claims, **characterized in that** the first angular range (0°; α₁), the second angular range (α₁; α₂) and the third angular range (0°; -α₃) follow on from each other.

7. Air-conditioner according to any one of the preceding claims, **characterized in that** it is an air-conditioner regulated on the water side.

8. Air-conditioner according to any one of the preceding claims, **characterized in that** it has a second valve (18) which is able to fully or partially open and close a defrosting duct (20).

9. Air-conditioner according to any one of the preceding claims, **characterized in that** it has a third valve (22) which is able to fully or partially open and close a footwell duct (24).

10. Air-conditioner according to any one of the preceding claims, **characterized in that** the second valve (18) and the third valve (22) are actuated by means of at least one further actuator.

11. Air-conditioner according to any one of the preceding claims, **characterized in that** the first valve (10), the stratification valve (12), the second valve (18) and the third valve (22) are disposed in a common housing (26).

## Revendications

1. Conditionneur d'air pour refroidir un espace, en particulier un espace intérieur de véhicule automobile, comportant un premier clapet (10) associé à des buses centrales et un clapet de stratification (12) qui est disposé en aval d'un évaporateur (14) ainsi que parallèlement à un élément de chauffage (16) et par l'intermédiaire de la position duquel une couche de température peut être provoquée dans l'espace à refroidir, le premier clapet (10) et le clapet de stratification (12) étant actionnés par un organe de réglage commun et l'organe de réglage présentant un axe de sortie qui peut tourner à l'intérieur d'une première zone angulaire (0° ; α₁) dans laquelle le premier clapet (10) est ouvert ou reste ouvert pendant que le clapet de stratification (12) reste fermé.

2. Conditionneur d'air selon la revendication 1, **caractérisé en ce que** l'organe de réglage comporte un moteur électrique.

3. Conditionneur d'air selon l'une des revendications précédentes, **caractérisé en ce que** le premier clapet (10) et le clapet de stratification (12) sont couplés mécaniquement.

4. Conditionneur d'air selon l'une des revendications précédentes, **caractérisé en ce que** l'organe de réglage comporte un axe de sortie qui peut tourner à l'intérieur d'une deuxième zone angulaire (α₁ ; α₂) dans laquelle le premier clapet (10) est ouvert ou reste ouvert pendant que le clapet de stratification (12) est ouvert.

5. Conditionneur d'air selon l'une des revendications précédentes, **caractérisé en ce que** l'organe de réglage comporte un axe de sortie qui peut tourner à l'intérieur d'une troisième zone angulaire (0°; -α₃) dans laquelle le premier clapet (10) est fermé ou reste fermé pendant que le clapet de stratification (12) est ouvert.

6. Conditionneur d'air selon l'une des revendications précédentes, **caractérisé en ce que** la première zone angulaire (0° ; α₁), la deuxième zone angulaire (α₁ ; α₂) et la troisième zone angulaire (0° ; -α₃) se font suite.

7. Conditionneur d'air selon l'une des revendications précédentes, **caractérisé en ce qu'**il est un conditionneur d'air réglé côté eau.

8. Conditionneur d'air selon l'une des revendications précédentes, **caractérisé en ce qu'**il présente un deuxième clapet (18) qui peut ouvrir et fermer totalement ou partiellement un canal de dégivrage (20).

9. Conditionneur d'air selon l'une des revendications précédentes, **caractérisé en ce qu'**il présente un troisième clapet (22) qui peut ouvrir et fermer totalement ou partiellement un canal de l'espace aux pieds des passagers (24).

10. Conditionneur d'air selon l'une des revendications précédentes, **caractérisé en ce que** le deuxième clapet (18) et le troisième clapet (22) sont actionnés par au moins un autre organe de réglage.

11. Conditionneur d'air selon l'une des revendications précédentes, **caractérisé en ce que** le premier clapet (10), le clapet de stratification (12), le deuxième clapet (18) et le troisième clapet (22) sont disposés dans un boîtier commun (26).
